Europäisches Patentamt

European Patent Office

Office européen des brevets

(11) Publication number: **0 120 990**
**B1**

# EUROPEAN PATENT SPECIFICATION

(45) Date of publication of patent specification: **31.05.89**

(51) Int. Cl.⁴: **H 01 F 41/14, G 11 B 5/84**

(21) Application number: **83111405.3**

(22) Date of filing: **15.11.83**

(54) **Read-only magnetic recording media and process of making the same.**

(30) Priority: **31.03.83 US 480635**

(43) Date of publication of application:
**10.10.84 Bulletin 84/41**

(45) Publication of the grant of the patent:
**31.05.89 Bulletin 89/22**

(84) Designated Contracting States:
**DE FR GB**

(56) References cited:
**FR-A-1 329 075**
**US-A-3 258 750**
**US-A-3 593 331**
**US-A-3 686 650**
**US-A-3 869 711**

**IBM TECHNICAL DISCLOSURE BULLETIN, vol.
18, no. 5, October 1975, pages 1641,1642, New
York, US; C.H. BAJOREK et al.: "Magnetically
discrete but physically continuous recording
tracks"**

(73) Proprietor: **International Business Machines
Corporation
Old Orchard Road
Armonk, N.Y. 10504 (US)**

(72) Inventor: **Bishop, Ross W.
1335 S. Lincoln Street
Longmont Colorado 80501 (US)**
Inventor: **Moxley, Arthur Eugene
2669 W. 9th Avenue
Longmont Colorado 80501 (US)**

(74) Representative: **Colas, Alain
Compagnie IBM France Département de
Propriété Intellectuelle
F-06610 La Gaude (FR)**

(56) References cited:
**PATENTS ABSTRACTS OF JAPAN, vol. 4, no.
115 (P-23)597r, 16th August 1980; & JP-A-55 70
935 (TOKYO SHIBAURA DENKI K.K.) 28-05-1980**

**PATENTS ABSTRACTS OF JAPAN, vol. 6, no.
27 (P-102)905r, 17th February 1982; & JP-A-56
145 536 (TOPPAN INSATSU K.K.) 12-11-1981**

Courier Press, Leamington Spa, England.

## Description

Field of the invention

This invention relates to the field of magnetic recording media and to a method of making such media.

Background of the invention

This invention finds particular utility in the field of read-only memory comprising magnetic recording media. An example is floppy disk media.

Read-only memory devices of this type can be used, for example, to stress-test disk drives in order to evaluate the drive's ability to read conventional floppy disks of the read-write variety. Another use of such a master disk is to evaluate how accurately the head of the disk drive is located. Since the master disk's data pattern is at a known position, if the drive's head does not provide an output signal which is within manufacturing specification, the drive is defective.

The prior art provides master disks using conventional media which is written in as accurate a manner as is possible. For example, a floppy disk, having a polyester film (Mylar by E. I. DuPont de Nemours & Co.) substrate which is coated with a continuous magnetizable layer, is placed in a master disk writer. This disk writer is constructed to produce as accurate a data track as possible, considering all of the dimensional tolerances, etc. which inevitably creep into such a disk writer.

Uses to which such master disks are put are shown, for example, in U.S. Patent 4.097.908, UK Patent 1.533.778, and the IBM Technical Disclosure Bulletins of September 1973 (pages 1338—1340) and October 1977 (pages 1897—1901). These publications are incorporated herein by reference for the purpose of showing the types of master disk read-only data patterns which may be made by practicing the present invention. However, in its broadest aspects, the present invention is not to be limited to any particular data pattern.

As is readily apparent, the ability to reliably test or stress a disk drive, using a master disk, is only as good as the master disk itself is accurately written.

Background of the present invention is also found in the thin film memory arts, where photoresist and etching techniques are used to form selective, accurately located patterns. U.S. Patents 3.677.843; 3.738.865 and 4.098.917 are exemplary.

Summary of the invention

An object of the present invention is to form a very accurate magnetic read-only data pattern. An exemplary utility for this data pattern is stress testing magnetic read/write devices such as disk drives.

The invention is defined in independant claims 1 and 10. According to the method of manufacture a nonmagnetic substrate is coated with a layer of resist, of the type used in semiconductor arts, and a layer of high coercivity material, metal or alloy (hereinafter called metal). The resist is optically exposed, using techniques which are mechanically very accurate and are well known in the semiconductor arts. Exposure of the resist, and the subsequent removal of a portion of the resist, leaves the underlying substrate with a pattern of discrete, isolated, metal bits or islands. These bits define the magnetic data track of the master disk. The substrate is now subjected to a steady-state magnetic field of a known magnetic-flux direction. The result is a master, read-only magnetic media of high positional or geographic accuracy. When this media is used to stress a magnetic recording device, observed variation from the device's manufacturing specification can be reliably charged to problems in the device, and not to inaccuracy in the master media.

Two conventional types of resist/metallization procedures can be used in the practice of this invention.

The preferred type first covers the nonmagnetic substrate (a thin polyester film, or thin nonmagnetic stainless steel) with a layer of photoresist. The photoresist is then optically exposed, using a mask which accurately depicts the bit pattern of the final magnetic data pattern. The photoresist is then developed, to selectively remove portions of the resist, leaving the underlying substrate exposed, by way of voids in the resist. These voids depict the magnetic bit pattern. A thin layer of high coercivity, magnetically-hard, metal is then vacuum deposited onto the photoresist layer and onto the exposed substrate. Lift-off procedures are then used to remove the remaining resist, and at the same time the resist's covering layer of metal. The result is a pattern of metal islands, in the form of the desired data pattern.

A second type of resist/metal procedure first vacuum deposits the thin metal layer onto the substrate, followed by the placement of a resist layer onto the metal layer. The resist layer is again optically exposed, as aforesaid. Conventional etching techniques are then used to remove the exposed resist and the underlying metal layer, leaving a pattern of metal bits, covered by exposed resist, in the form of the desired data pattern.

Whichever resist/metallization procedure is used, the substrate's metal bit pattern is now subjected to a steady state magnetic field, in order to magnetize the individual bits, thus forming a read-only data pattern which can be read by a magnetic head.

The foregoing and other features and advantages of the invention will be apparent from the following more particular description of preferred embodiments of the invention, as illustrated in the accompanying drawing.

Brief description of the drawing

Figures 1A, B, C and D show the present invention's preferred means of forming discrete metal bits 10 on a floppy disk substrate 11;

Figures 2A, B, C and D show another embodiment of the present invention, as an alternative to Figure 1;

Figure 3 shows the use of a DC-energized electromagnet 12 to permanently magnetize metal bits 10 into a read-only data pattern; and

Figure 4 is a top view of two adjacent metal bits making up a data pattern of a master floppy disk of the present invention.

Description of the preferred embodiments

An exemplary use of the present invention is to manufacture master read-only magnetic disks of the floppy type, for use in the precise positioning of a magnetic head relative to the spindle of a floppy disk drive, as the drive is being manufactured.

European Patent Application Serial Number 831035613 filed April 13, 1983 shows a device using such a disk to position a magnetic head during manufacture of a disk drive.

The present invention provides a master disk by the use of photoresist techniques, which in and of themselves are conventional, along with conventional vacuum metal-deposition techniques. The result is a new and unusual master disk of exceptional accuracy.

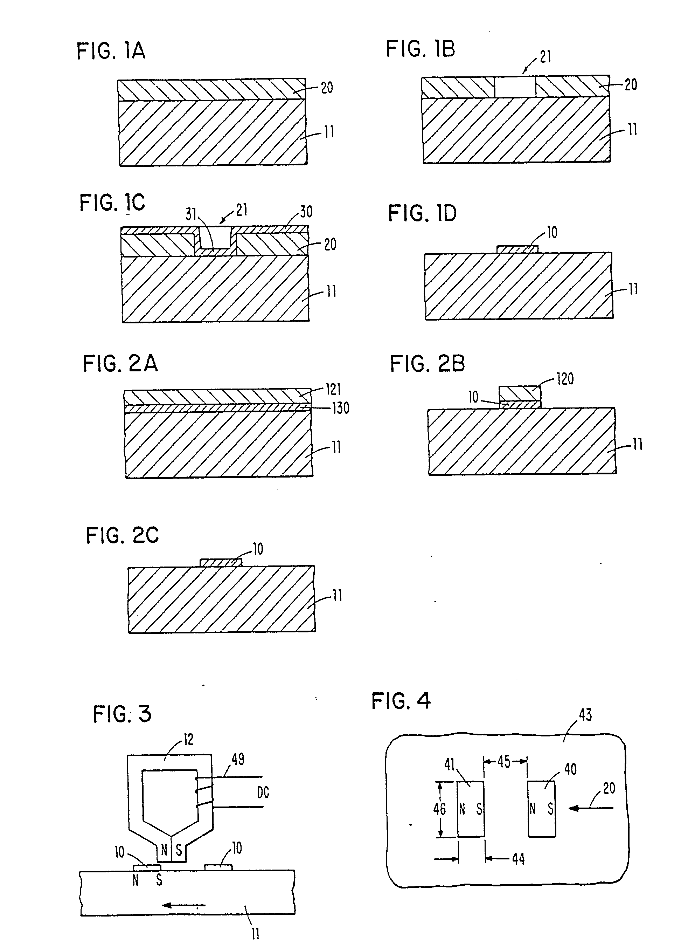

Figures 1A, B, C and D show the steps of a preferred embodiment of the present invention. In this process, a flexible, nonmagnetic substrate (disk) 11 is first completely covered, on the top surface, with a layer of photoresist 20. Substrate 11 is preferably a thin, nonmagnetic stainless steel, about 0,050 mm thick. While a polyester film, such as Mylar can be used, stainless steel is available having a low coefficient of thermal expansion, and this physical property will result in a master disk whose data pattern remains in the desired geographic position as the disk is used in different temperature environments.

Resist 20 is also conventional, and can be either a positive or a negative resist. Use of a negative resist will be described; i.e., the resist is illuminated or exposed in the area where the resist will be removed during the developing step. An exemplary range of thickness for resist layer 20 is about 0,0025 to 0,0076 mm. While the exact resist to be used in practice of the present invention is left to those skilled in the art, it will be readily appreciated by skilled practitioners that the resist should be particle free, and that good practice, such as filtration of the liquid resist before use, should be followed.

An exemplary way to lay down such resist layer 20, when substrate 11 is in the form of an 20 cm (8-inches) 13,3 cm (5¹/4-inches) disk, is to use the same procedure now used to topically apply a lubricant to such a disk; namely, the liquid resist is dripped onto the center of the rotating disk.

The next steps in the practice of the present invention result in the arrangement shown in Figure 1B, where substrate 11 is covered by a resist layer 20 having a pattern of accurately located voids 21.

After resist layer 20 is formed on substrate 11, the resist is exposed by the use of a very accurate optical mask (not shown). The technology used to make such a mask is well known, and is used in arts such as the manufacture of semiconductor devices. The mask artwork is preferably made in a manner to compensate for changes in the physical dimensions of substrate 11, with temperature, if substrate 11 is of the temperature sensitive type that can produce movement of the disk's master data pattern when the disk is used in extreme temperature conditions a condition that is usually avoided. Another state of the art procedure which is preferred, but is not essential to the practice of the present invention, is to form the data pattern artwork using computer-supported polar coordinate techniques to place the artwork, thereby more accurately placing the data pattern onto substrate 11.

Whatever means is used to form such artwork, the exposed/unexposed surface of resist layer 20 is such that subsequent development of the exposed layer removes portions of the layer, and causes layer 20 to contain a population of voids 21 (Figure 1B) which occupy geographic locations on substrate 11 identical to the desired magnetic, read-only data pattern of the master disk.

The next step in the process is exemplified by Figure 1C. In this figure, a thin layer of high permeability magnetic metal has been deposited on top of the entire disk surface, such that all voids 21 now have a layer 31 of such metal attached to the surface of substrate 11. The preferred method of depositing layer 30 is by way of well known vacuum deposition techniques, such as electron beam vaporization or sputter deposition. These techniques readily lend themselves to the deposition of very thin layers such as are needed in the practice of the present invention. An exemplary thickness for layer 30 is in the range of 0,2 to 0,8 µm.

A high permeability metal is preferred, since, as is well known by those of skill in the art, a given volume of an isolated metal bit, formed in accordance with the present invention, will exhibit more signal strength to a read head as it possesses a higher permeability. Thus, the higher the permeability, the smaller can be the volume of metal, including its thickness. As will be appreciated, the thinner the metal bit or island, the smoother will be the master disk of the present invention.

An examplary commercially available metal which is preferred for layer 30 is Alnico (an aluminum, nickel, cobalt alloy) or Cunife (a trademark of Hoskins Mfg. Co. for a 60% copper, 20% nickel and 20% iron alloy).

Exemplary means of vacuum depositing magnetic coatings are shown in U.S. Patents 3.432.632 and 4.432.633.

Now that substrate 11 contains the desired bit pattern of islands 31 (Figure 1C), it is necessary to remove the remaining resist 20, and its covering layer of metal, thereby leaving a pattern of isolated metal bits 10, one of which is shown in Figure 1D. This procedure is known in the art as lift-off, and an exemplary procedure is described in the IBM Technical Disclosure Bulletin of September 1981, at pages 2081—2083.

Figure 4 shows two such adjacent metal bits 40 and 41, which, with other such islands not shown, form a data pattern to be read by a disk drive's head (also not shown) as relative movement 42 occurs between disk 43 and the head. Exemplary minimum dimensions of the islands are dimension 44 is in the range about $150 \cdot 10^{-6}$ cm (60 microinches) to $250 \cdot 10^{-6}$ cm (100 microinches), and dimension 46 is in the range of 0,1 to 0,22 mm. The individual islands 40, 41 are separated by a minimum dimension 45 in the range of about $190 \cdot 10^{-6}$ cm (75 microinches) to $250 \cdot 10^{-6}$ cm (100 microinches). Maximum dimensions will depend on the bit pattern or sequence desired.

As has been stated, the data format of the pattern to be formed by the practice of the present invention can take any of a great variety of forms, and Figure 4 is not to be taken as a limitation on the present invention.

As the last essential step of the present invention the master substrate, now carrying a pattern of high permeability metal bits or islands, is permanently magnetized by the use of a steady-state magnetic field. An exemplary step is shown in Figure 1D where electromagnet write head 12, whose coil 49 is energized from a DC source of voltage, produces the bit magnetization shown. Head 12 is preferably fixed in position as disk 11 rotates thereunder.

· The embodiment of Figures 1A—D is preferred because this procedure produces a more uniform metal cross section for each of the bits 10 (Figure 1D). However, the present invention is operable using other procedures, for example the process of Figures 2A—C. In this process, substrate 11 is first full-surface covered with a thin metal layer 130, identical to layer 30 of Figure 1C. Then, a layer of resist 120 is placed on top of layer 130, in the manner of layer 20 of Figure 1A. Thereafter, the top-disposed resist layer is subjected to the aforesaid exposure step which defines the final product's bit pattern.

As the next step in this alternate process, the assembly is subjected to state of the art development, which removes the major portion of the resist layer, and its underlying layer of metal. As a result, the substrate now carries resist-covered metal bits 10 as shown in Figure 2B. Since the height of these islands is higher than necessary, by the thickness of resist layer 120, this layer is preferably removed by use of an appropriate solvent. The end product is shown in Figure 2C, i.e., the analog of Figure 1D.

The resulting master recording disk (Figures 1D and 2C) may, if desired, be covered with a thin protective layer, or perhaps a layer of conventional flexible disk lubricant. However, the thickness of bits 10 (Figures 1D and 2C), which is in the range of 0,25 µm, provides a master disk which is smoother than the usual floppy disk whose data carrying surface is formed of conventional oxide-bearing polymeric binder.

While the invention has been particularly shown and described with reference to preferred embodiments thereof, it will be understood by those skilled in the art that various changes in form and details may be made.

## Claims

1. A method of forming a magnetic data pattern in-situ directly on a non magnetic substrate, characterized in that it comprises:

a) forming a photoresist layer (20) on a non-magnetic substrate (11) selected from polyester film or non-magnetic stainless steel,

b) exposing said photoresist layer in the pattern of the data pattern;

c) developing the photoresist, to thereby leave voids (21) in said photoresist layer which expose the underlying substrate;

d) vacuum depositing a magnetic metal (Figure 1c) on the remaining photoresist and in the voids;

e) removing (Figure 1D) the remaining photoresist and the metal contained thereon, thereby leaving portions of metal directly on said substrate in the pattern of the data pattern; and

f) permanently magnetizing said metal portions by subjecting (Figure 3) said metal portions to a magnet field, to thereby form permanent read-only magnetic media whose magnetic data pattern is formed in-situ.

2. The method according to claim 1 wherein said substrate is formed from the group polyester film or stainless steel, about 0,05 mm thick.

3. The method according to claims 1 or 2 wherein said islands are about $50 \cdot 10^{-6}$ m (20 microinches) thick.

4. The method according to claims 1, 2 or 3 wherein said metal is a copper/nickel/iron alloy or an aluminium/nickel/cobalt alloy.

5. The method according to any one of the preceding claims wherein said substrate is in the form of a floppy disk, and said data pattern is at least one circular data track on said floppy disk.

6. The method of according to any one of the preceding claim 13 wherein said metal is selected from the group AlNiCo or CuNiFe.

7. A method of making a floppy stress-disk, having a read-only, stress data pattern, for use in a floppy disk drive to determine the accuracy of the head-location within the disk drive, the method of making the disk being characterized in that it comprises:

providing a floppy nonmagnetic disk substrate;

using photolithographic/photoresist/vacuum deposition techniques to form discrete magnetic metal bits of high coercivity material on said substrate, the location pattern of said bits on said substrate being said stress data pattern; and

subjecting said substrate and said metal bits to a steady state magnetizing field, to thereby permanently magnetize said metal bits.

8. The method of claim 7 wherein an electromagnet is used to provide said magnetic field.

## Patentansprüche

1. Methode zum Erstellen eines magnetischen Datenmusters direkt "vorort" auf einem nichtmagnetischen Substrat, dadurch gekennzeichnet, dass sie aus folgendem zusammengesetzt ist:

a) Aufbringen einer lichtunempfindlichen Schicht (20) auf einem nichtmagnetischen Substrat, das aus Polyesterfilm oder nichtmagnetischem nichtrostendem Stahl gewählt wurde;

b) Exposition der genannten nichtmagnetischen Schicht im Muster des Datenmusters;

c) Entwickeln des Photoresists, um dadurch Leerstellen (21) in der genannten lichtunempfindlichen Schicht zu schaffen, die das darunterliegende Substrat exponieren;

d) Im Vakuum, Aufbringen einer magnetischen Metallschicht (Fig. 1c) auf dem verbleibenden Photoresist und den Leerstellen;

e) Entfernen (Fig. 1D) des restlichen Photoresists und des darauf befindlichen Metalls, wodurch direkt auf dem genannten Substrat liegende und dem Muster des genannten Datenmusters entsprechende Metallflächen übrigbleiden; und

f) Dauermagnetisierung der genannten Metallflächen, indem sie einem Magnetfeld ausgesetzt werden (Fig. 3), um derart permanente magnetische Festspeichermittel zu realisieren, deren magnetisches Datenmuster direkt an Ort und Stelle hergestellt wird.

2. Methode nach Anspruch 1, bei der das genannte Substrat aus einem etwa 0,05 mm dicken Polyesterfilm oder nichtrostendem Stahl hergestellt wird.

3. Method nach Anspruch 1 oder 2, bei der die genannten "Inseln" etwa $50 \cdot 10^{-6}$ m (20 Microinches) dick sind.

4. Methode nach Anspruch 1, 2 oder 3, bei der das genannte Metall eine Kupfer/Nickel/Eisen-Legierung oder eine Aluminium/Nickel/Kobalt-Legierung ist.

5. Methode nach allen der vorstehenden Ansprüche, bei der das genannte Substrat in Form einer flexiblen Magnetplatte vorliegt und das genannte Datenmuster zumindest eine kreisförmige Spur auf der genannten Magnetplatte darstellt.

6. Methode nach allen der vorstehenden Ansprüche, bei der das genannte Metall aus der AlNiCo- oder CuNiFe-Gruppe ausgewählt wird.

7. Methode zum Herstellen einer flexiblen Magnetplatte mit einem Festspeicher-, Hochleistungs-Datenmuster zur Verwendung in einem Antrieb für flexible Magnetplatten, um die Genauigkeit der Kopf-Position im Magnetplattenantrieb zu bestimmen, wobei die Herstellungsmethode der Magnetplatte wie folgt gekennzeichnet ist:

Erstellen eines elastischen, nichtmagnetischen Plattensubstrats;

Verwendung von photolithographischen/lichtunempfindlichen/Vakuum-Abscheidungstechnik-Verfahren, um diskrete Magnet-/Metall-Stücke aus hochkoerzitivem Material auf dem genannten Substrat zu erzeugen, wobei das Lagemuster der genannten Stücke auf dem genannten Substrat das genannte Hochleistungs-Datenmuster ist; und

Exposition des genannten Substrats und der genannten Metall-Stücke in einem kontinuierlichen Magnetisierungsfeld, um derart die genannten Metall-Stücke permanent zu magnetisieren.

8. Methode nach Anspruch 7, bei der ein Elektromagnet zum Erzeugen des genannten Magnetfelds verwendet wird.

## Revendications

1. Procédé pour former une configuration de données magnétiques directement sur un substrat non magnétique, caractérisé en ce qu'il comprend des étapes consistant à:

a) former une couche (20) d'un matériau photorésistant sur un substrat non magnétique (11) constitué par un film de polyester ou par de l'acier inoxydable non magnétique,

b) exposer ladite couche de matériau photorésistant conformément à la configuration de données,

c) développer le matériau photorésistant de façon à laisser dans ladite couche de matériau photorésistant des espaces vides (21) qui exposent le substrat sous-jacent,

d) déposer sous vide un métal magnétique (fig. 1c) sur le matériau photorésistant restant et dans les espaces vides,

e) retirer (fig. 1d) le matériau photorésistant restant et le métal qui se trouve sur celui-ci, laissant ainsi des éléments métalliques directement sur ledit substrat conformément à la configuration de données, et

f) magnétiser de façon permanente lesdits éléments métalliques en les exposant (fig. 3) à un champ magnétique, de façon à réaliser un milieu magnétique permanent permettant seulement des opérations de lecture et sur lequel une configuration de données magnétiques est directement formée.

2. Procédé selon la revendication 1, dans lequel ledit substrat est constitué par un film de polyester ou par le l'acier inoxydable, d'une épaisseur de 0,05 mm.

3. Procédé selon la revendication 1 ou 2, dans lequel lesdits îlots ont une épaisseur d'environ $50 \cdot 10^{-6}$ m.

4. Procédé selon la revendication 1, 2 ou 3, dans lequel ledit métal est un alliage cuivre/nickel/fer ou un alliage aluminium/nickel/cobalt.

5. Procédé selon l'une quelconque des revendications précédentes, dans lequel ledit substrat prend la forme d'un disque souple et ladite configuration de données forme au moins une piste de données circulaire sur ladite disque souple.

6. Procédé selon l'une quelconque des revendications précédentes, dans lequel ledit métal est choisi parmi les alliages AlNiCo et CuNiFe.

7. Procédé de réalisation d'un disque de test souple, comportant une configuration de données de test et permettant seulement des opérations de lecture, utilisable dans une unité de disques souples pour déterminer la précision du positionnement de la tête dans l'unité de disques, ledit procédé de réalisation de disque étant caractérisé en ce qu'il comprend des étapes consistant à:

fournir un substrat de disque souple non magnétique,

employer des techniques de dépôt photolithographique/de dépôt de matériau photorésistant/ de dépôt sous vide pour former sur ledit substrat des petits éléments métalliques discrets en matériau magnétique fortement coercitif, la configuration des positions desdits éléments discrets sur ledit substrat étant ladite configuration de données de test, et

exposer ledit substrat et lesdits petits éléments métalliques à un champ magnétique permanent, pour magnétiser ces derniers de façon permanente.

8. Procédé selon la revendication 7, dans lequel ledit champ magnétique est obtenu au moyen d'un électroaimant.

**FIG. 1A**

**FIG. 1B**

**FIG. 1C**

**FIG. 1D**

**FIG. 2A**

**FIG. 2B**

**FIG. 2C**

**FIG. 3**

**FIG. 4**